# EUROPÄISCHE PATENTANMELDUNG

(11) **EP 1 429 407 A1**
(43) Veröffentlichungstag der Anmeldung: **16.06.2004**
(21) Anmeldenummer: 02027646.5
(22) Anmeldetag: 11.12.2002
(51) Int. Cl.: H01M 8/02, H01M 8/24

(54) **Baureihenkonzept**

(71) Anmelder: SFC Smart Fuel Cell GmbH, 85649 Brunnthal-Nord (DE)
(72) Erfinder: Müller, Jens, Dr., 81827 München (DE); Freitag, Oliver, 81667 München (DE)
(74) Vertreter: Grünecker, Kinkeldey, Stockmair & Schwanhäusser Anwaltssozietät

(57) **Zusammenfassung**

Ein Baureihenkonzept mit Komponenten für Brennstoffzellensysteme wird bereitgestellt, mit denen unterschiedlich große und/oder leistungsfähige Brennstoffzellensysteme günstiger hergestellt werden können. Eine dieser Komponenten ist ein Basismodul; eine weitere Komponente ist ein Brennstofftank. Mit dem Basismodul können ebenfalls bereitgestellte Brennstoffzellen- und Wärmetauschereinrichtungen verbunden werden, um ein Brennstoffzellensystem zu bilden.

## Beschreibung

### Gebiet der Erfindung

Die Erfindung betrifft ein Baureihenkonzept für Brennstoffzellensysteme, gemäß dem auf einfache Weise Brennstoffzellensysteme gefertigt werden können, indem erfindungsgemäß bereitgestellte, geeignet ausgebildete Systemkomponenten miteinander verbunden werden, wobei unterschiedliche Leistungsklassen abgedeckt werden können. Dabei kann ein und dasselbe Basismodul für jede dieser Leistungsklassen verwendet werden.

### Stand der Technik

Der Markt für Energieversorgungseinrichtungen aller Art ist hinsichtlich der Leistungs- und Kapazitätsklassen fein abgestuft. Betrachtet man Batterien als Anschauungsbeispiel, so werden diese in der Regel für spezielle Einsatzorte konzipiert und für den entsprechenden Verwendungszweck optimiert.

So gibt es z.B. jede der bekannten Batterietypen "Micro", "Mignon", "Baby", "Mono", die jeweils eine bestimmte äußere Form und eine Nennspannung von 1,5V aufweisen, in qualitativ unterschiedlichen Ausführungen, die sich hinsichtlich ihrer Kapazität, aber auch anderen Eigenschaften wie Auslaufsicherheit, Temperaturbereich, etc. unterscheiden. Ähnliches gilt auch für Autobatterien (Starterbatterien), die es beispielsweise mit unterschiedlichsten, zum Teil nahe beieinander liegenden Kapazitäten (z.B. 50 Ah, 55 Ah, 60 Ah, 70 Ah, 80 Ah, 90 Ah, 100 Ah, .... ) gibt.

Dagegen sind Brennstoffzelleneinrichtungen, die als netzunabhängige Energieversorgungseinrichtungen für einen bestimmten Verwendungszweck vorgesehen sind, zur Zeit noch Individuallösungen: Sie unterscheiden sich mehr oder weniger stark von Brennstoffzelleneinrichtungen, die für einen anderen Verwendungszweck vorgesehen sind. Daher sind Komponenten bzw. aus solchen Komponenten gebildete Strukturen eines Brennstoffzellensystems mit einer groß dimensionierten Brennstoffzelleneinrichtung nur in Ausnahmefällen für ein kleiner dimensioniertes System geeignet. Dies schlägt sich negativ sowohl auf den Anschaffungspreis der gesamten Systeme, wie auch der Einzelkomponenten nieder.

### Beschreibung der Erfindung

Angesichts dieser Nachteile ist es eine allgemeine Aufgabe der Erfindung, ein Konzept bereitzustellen, dass dazu beiträgt, die (Komplexitäts-)Kosten von Brennstoffzellensystemen zu senken und damit ihre Akzeptanz zu erhöhen. Die allgemeine Lösung dieser Aufgabe besteht in einem Baureihenkonzept: Dadurch können auf denselben strukturellen Prinzipien basierende, aber unterschiedlich große und/oder leistungsfähige Vorrichtungen zusammen mit anderen Systemkomponenten verwendet werden, die in ein und derselben Ausführung mit jeder dieser unterschiedlichen Vorrichtungen kombiniert werden. Die in unterschiedlichen Vorrichtungen einsetzbaren Komponenten werden auch als Gleichteile bezeichnet. Ihre Vorteile sind vielgestaltig: Auf Hersteller- und Zuliefererseite verringern sie die Herstellungs- und Lagerkosten. Ihre Verwendung vereinheitlicht im Allgemeinen die Systemstruktur und vereinfacht somit den Zusammenbau, und sorgt dadurch im Endeffekt für niedrigere Herstellungskosten. Für den Konsumenten ergeben sich ― verglichen mit Individuallösungen ― niedrigere Anschaffungs-, Ersatzteil- und Reparaturkosten, etc.

Eine spezielle Aufgabe der Erfindung ist es, Einrichtungen zur Realisierung des oben beschriebenen Baureihenkonzepts bereitzustellen, sowie ein Verfahren, um unter Verwendung der erfindungsgemäßen Einrichtungen ein Brennstoffzellensystem zu fertigen.

Diese Aufgabe wird durch das Basismodul gemäß Anspruch 1, die Brennstoffzelleneinrichtung gemäß Anspruch 5, die Wärmetauschereinrichtung gemäß Anspruch 6, den Brennstofftank gemäß Anspruch 8, sowie das Verfahren gemäß Anspruch 9 gelöst. Vorteilhafte Weiterbildungen sind in den abhängigen Ansprüchen beschrieben.

Das in Anspruch 1 definierte Basismodul für ein Brennstoffzellensystem umfasst eine Anschlusseinrichtung für eine Brennstoffzelleneinrichtung, eine Anschlusseinrichtung für eine Wärmetauschereinrichtung und eine Anschlusseinrichtung für eine Brennstoffzufuhreinrichtung.

Das Basismodul ist gewissermaßen das zentrale Verbindungsglied zwischen einer "Brennstoffquelle", wie z.B. einer Brennstoffleitung oder einem Brennstofftank, einer Brennstoffzelleneinrichtung als Brennstoffverbraucher, und einer Wärmetauschereinrichtung zur Regelung des Wärmehaushalts der Brennstoffzelleneinrichtung (beispielsweise zur Kühlung der Brennstoffzelleneinrichtung und/oder zur Rückgewinnung von Fluidkomponenten aus dem Abstrom der Brennstoffzelleneinrichtung). Im Unterschied zu diesen ankoppelbaren Einrichtungen ist das Basismodul selbst leistungsund verbrauchsinvariant. Das Basismodul kann unter anderem Fluidfördereinrichtungen (Pumpen, Filter, Dosiereinrichtungen), Entsorgungseinrichtungen für Abfallstoffe, Steuereinrichtungen für das Brennstoffzellensystem, elektrische Anschlüsse für über das Brennstoffzellensystem zu versorgende Einrichtungen und weitere, zur Systemperipherie zählende Einrichtungen aufweisen.

Die Anschlusseinrichtung des Basismoduls für die Brennstoffzelleneinrichtung kann unter anderem auch Einrichtungen umfassen, die neben der Fluidverbindung auch eine feste mechanische Verbindung zwischen dem Basismodul und einer anzuschließenden Brennstoffzelleneinrichtung ermöglichen.

Die Anschlusseinrichtung für eine Brennstoffzufuhreinrichtung kann ein Anschluss, z.B. eine Steckkupplung, für eine Brennstoffversorgungsleitung sein, aber auch ein Anschluss für einen Brennstofftank. Dieser Anschluss kann innerhalb des Basismoduls, aber auch an einer Außenseite des Basismoduls vorgesehen sein. In letzterem Fall ist es leichter möglich, Brennstofftanks mit unterschiedlichen Fassungsvermögen und unterschiedlichen äußeren Ausmaßen am Basismodul anzukoppeln. Die Verbindung zwischen Basismodul und Brennstofftank kann derart ausgebildet sein, dass Basismodul und Brennstofftank eine vom Hersteller bereitgestellte Einheit bilden, wobei der Brennstofftank im eingebauten oder angekoppelten Zustand wiederauffüllbar ist. Die Anschlusseinrichtung kann aber auch einen Steckplatz für eine Brennstoffpatrone (oder für mehrere Brennstoffpatronen) umfassen, welcher mit wenigen Handgriffen das einfache Austauschen entleerter Brennstoffpatronen durch volle Brennstoffpatronen ermöglicht.

In besonders bevorzugten Weiterbildungen des Basismoduls sind die drei Anschlussseinrichtungen an einer Seite des Basismoduls vorgesehen bzw. zwei Anschlussseinrichtungen an einer Seite des Basismoduls vorgesehen und die dritte Anschlusseinrichtung an der gegenüberliegenden Seite des Basismoduls vorgesehen.

Dadurch wird eine Brennstoffzellen-Systemarchitektur bereitgestellt, die eine vorteilhafte räumliche Anordnung der einzelnen Komponenten ermöglicht, so dass geometrisch bedingte Konflikte zwischen den einzelnen Systemkomponenten vermieden und etwaige räumliche Konflikte zwischen dem Brennstoffzellensystem und der Umgebung von vornherein auf bestimmte Raumrichtungen eingeschränkt werden.

Vorzugsweise sind die Anschlusseinrichtung für die Brennstoffzelleneinrichtung und die Anschlusseinrichtung für die Wärmetauschereinrichtung an der selben Seite des Basismoduls vorgesehen, da die Brennstoffzelleneinrichtung und Wärmetauschereinrichtung auf vergleichbare Art und Weise mit der Leistungskapazität des Brennstoffzellensystems skalieren. Eine Änderung der Skalierung erfolgt zweckmäßigerweise nur entlang einer Raumrichtung, d.h. durch ein Verlängern/Verkürzen von Brennstoffzelleneinrichtung und Wärmetauschereinrichtung, bei jeweils gleichbleibendem Querschnitt. Mit dieser Anordnung kann erreicht werden, dass zu jeder Brennstoffzelleneinrichtung eine entsprechend ausgelegte Wärmetauschereinrichtung bereitgestellt werden kann, die in dieser Raumrichtung (Längsrichtung) gleiche Abmessungen aufweisen.

Die erfindungsgemäße Brennstoffzelleneinrichtung umfasst eine Anschlusseinrichtung zum Anschließen der Brennstoffzelleneinrichtung an der dafür am Basismodul vorgesehenen Anschlusseinrichtung. Die Anschlusseinrichtung der Brennstoffzelleneinrichtung ist komplementär zu der Anschlusseinrichtung für die Brennstoffzelleneinrichtung am Basismodul ausgebildet. Diese zueinander komplementären Anschlusseinrichtungen bleiben identisch für unterschiedlich skalierte Brennstoffzelleneinrichtungen, so dass ein und dasselbe Basismodul zum Aufbau unterschiedlich dimensionierter Brennstoffzellensysteme verwendbar ist.

Ähnlich wie die erfindungsgemäße Brennstoffzelleneinrichtung umfasst die erfindungsgemäße Wärmetauschereinrichtung eine Anschlusseinrichtung zum Anschließen der Wärmetauschereinrichtung an der dafür am Basismodul vorgesehenen Anschlusseinrichtung, komplementär zu der Anschlusseinrichtung für die Wärmetauschereinrichtung am Basismodul ausgebildet ist.

Wie oben bereits angesprochen, ist die Wärmetauschereinrichtung vorteilhafterweise in Abhängigkeit von einer Leistungsklasse der zugehörigen Brennstoffzelleneinrichtung derart dimensioniert, dass die Brennstoffzelleneinrichtung und die Wärmetauschereinrichtung in wenigstens einer räumlichen Dimension, z.B. in einer Längsrichtung, gleiche Abmessungen aufweisen.

Weiterhin stellt die vorliegende Erfindung einen Brennstofftank bereit, der zur Verwendung mit dem erfindungsgemäßen Basismodul eingerichtet ist, und der zu diesem Zwecke eine Anschlusseinrichtung zum Anschließen des Brennstofftanks an der am Basismodul vorgesehenen Anschlusseinrichtung für eine Brennstoffzufuhreinrichtung aufweist, wobei die Ankopplungseinrichtung des Brennstofftanks komplementär zu der des Basismoduls ausgebildet ist.

Die oben angegebene Aufgabe wird ferner durch ein Verfahren zur Herstellung eines Brennstoffzellensystems gelöst, welches die folgenden Schritte umfasst: Ankoppeln einer erfindungsgemäßen Brennstoffzelleneinrichtung und einer erfindungsgemäßen Wärmetauschereinrichtung an den hierfür am erfindungsgemäßen Basismodul vorgesehenen Anschlusseinrichtungen.

In einer vorteilhaften Weiterbildung umfasst das Verfahren den weiteren Schritt: Ankoppeln eines erfindungsgemäßen Brennstofftanks an der an dem Basismodul vorgesehenen Anschlusseinrichtung für eine Brennstoffzufuhreinrichtung.

Die Erfindung wird nachfolgend anhand von bevorzugten Ausführungsformen unter Bezugnahme auf die beigefügte Zeichnung näher erläutert. Es zeigen:
- Fig. 1A:: ein erstes nach dem Baureihenkonzept der vorliegenden Erfindung aufgebautes Brennstoffzellensystem;
- Fig. 1B:: das in Fig. 1A verwendete erfindungsgemäße Basismodul;
- Fig. 2:: ein zweites Brennstoffzellensystem nach dem Baureihenkonzept der vorliegenden Erfindung;
- Fig. 3:: ein drittes Brennstoffzellensystem nach dem Baureihenkonzept der vorliegenden Erfindung;
- Fig. 4:: weitere Brennstoffzellensysteme nach dem Baureihenkonzept der vorliegenden Erfindung.

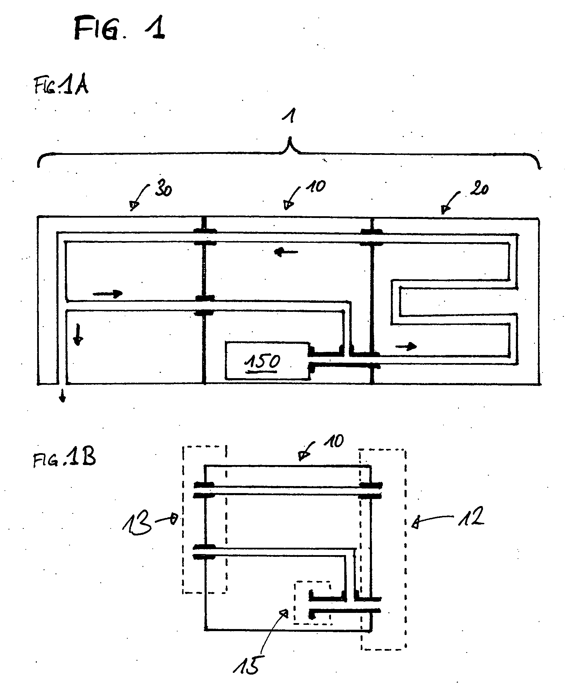

Figur 1 zeigt ein erstes bevorzugtes Beispiel der Anwendung des erfindungsgemäßen Baureihenkonzepts der vorliegenden Erfindung. Das in Figur 1A gezeigte Brennstoffzellensystem 1 besteht aus drei Systemkomponenten, nämlich einem zentral vorgesehenen Basismodul 10 und an diesem seitlich angeschlossenen Brennstoffzellen- 20 und Wärmetauschereinrichtungen 30. Zur besseren Veranschaulichung ist das Basismodul 10 in Figur 1 B nochmals separat dargestellt.

Das Basismodul 10 weist eine Anschlusseinrichtung 12 für die Brennstoffzelleneinrichtung 20, eine Anschlusseinrichtung 13 für die Wärmetauschereinrichtung 30, und eine Anschlusseinrichtung 15 für eine Brennstoffpatrone 150 auf. Die Anschlusseinrichtungen 12 und 13 sind so vorgesehen, dass keine konstruktionsbedingten Konflikte auftreten, wenn eine der beiden Einrichtungen 20, 30 oder beide Einrichtungen 20, 30 ausgetauscht und durch entsprechende größer oder kleiner dimensionierte Einrichtungen ersetzt werden sollen. Innerhalb des Basismoduls 10 ist eine Anschlusseinrichtung 15 für eine Brennstoffversorgungseinrichtung vorgesehen; im vorliegenden Fall ist dies ein Steckplatz für eine Brennstoffpatrone 150.

Die Darstellung ist streng schematisch zu verstehen. So sind keine Fluidfördereinrichtungen, elektronische Einrichtungen etc. eingezeichnet. Was die Fluidführung anbelangt, so ist der Einfachheit nur der Brennstoffkreislauf (Anodenkreislauf) dargestellt. Die Brennstoffversorgung erfolgt über die Brennstoffpatrone 150. Der Brennstoff wird im Basismodul 10 mit einem anderen Fluid zu einem Brennstoffgemisch versetzt; dieses Brennstoffgemisch wird anodenseitig der Brennstoffzelleneinrichtung 20 zugeführt. Danach wird es in der Wärmetauschereinrichtung 30 gekühlt und rezykliert.

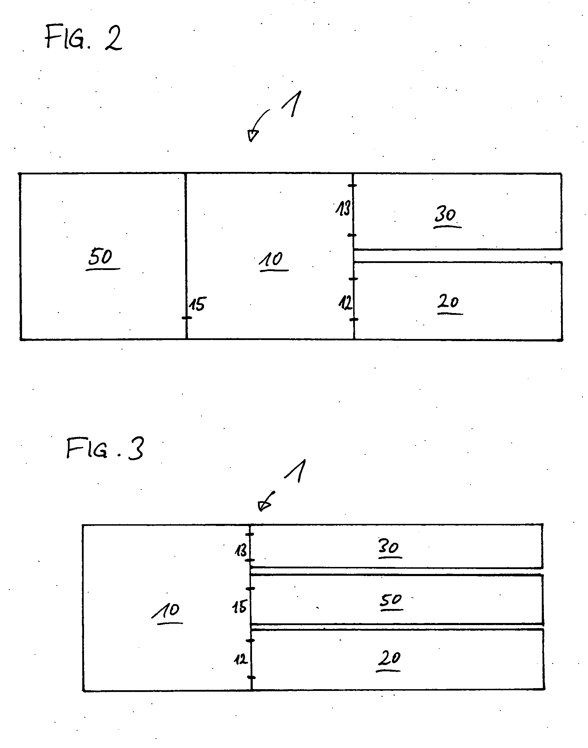

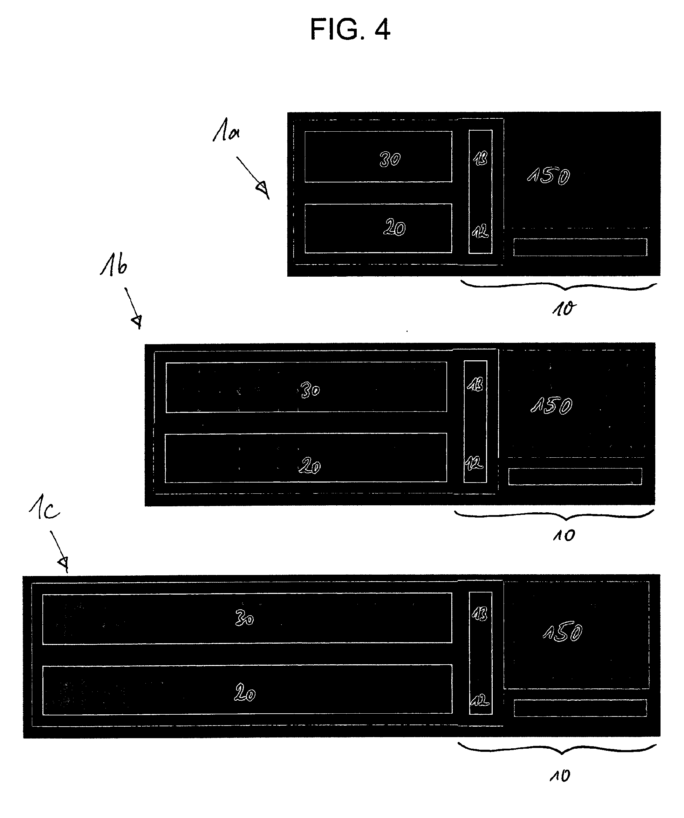

Die Figuren 2 und 3 zeigen weitere bevorzugte Ausführungsformen von Brennstoffzellensystemen 1, die nach dem Baureihenkonzept der vorliegenden Erfindung konzipiert sind.

Bei diesen Darstellungen ist der Grad der Abstraktion gegenüber Figur 1 weiter erhöht (so sind unter anderem keine Fluidwege mehr eingezeichnet). Im Unterschied zur Figur 1 sind bei den Ausführungsformen von Figur 2 und 3 die Anschlusseinrichtungen 15 des Basismoduls 10 so vorgesehen, dass ein Brennstofftank 50 außen an dem Basismodul angeschlossen werden kann.

Beim Basismodul 10 von Figur 2 sind an der Seite, die der Anschlusseinrichtung 15 für den Brennstofftank 50 gegenüberliegt, zwei Anschlusseinrichtungen 12 und 13 für eine Brennstoffzelleneinrichtung 20 und eine Wärmetauschereinrichtung 30 vorgesehen. In dieser bevorzugten Ausführungsform - wie auch bei denen von Figur 3 und Figur 4 - werden die Brennstoffzelleneinrichtung 20 und die Wärmetauschereinrichtung 30 an derselben Seite des Basismoduls 10 angebracht. Zu jeder Brennstoffzelleneinrichtung 20 einer bestimmten Leistungsklasse gehört eine entsprechend leistungsfähige Wärmetauschereinrichtung 30, wobei sich die Größe der Einrichtungen 20 und 30 beim Wechsel der Leistungsklasse nur entlang einer Raumrichtung ändert, und zwar vorzugsweise im gleichen Ausmaß.

Das Basismodul 10 von Figur 3 unterscheidet sich dadurch von dem in Figur 2 gezeigten, dass hier alle drei Anschlusseinrichtungen 12, 13, 15 an einer Seite des Basismoduls 10 vorgesehen sind. Die gezeigte Abfolge, Brennstofftank 50 zwischen Brennstoffzelleneinrichtung 20 und Wärmetauschereinrichtung 30 ist nur beispielhaft zu verstehen. Bei der gezeigten Anordnung können mit leistungsfähigeren Brennstoffzelleneinrichtungen 20 und entsprechend leistungsfähigeren Wärmetauschereinrichtungen 30 auch Brennstofftanks 50 mit höherem Fassungsvolumen verwendet werden, so dass trotz des erhöhten Verbrauchs keine Verkürzung der Betriebsdauer oder häufigeres Wiederbefüllen des Tanks 50 in Kauf genommen werden müssen.

Figur 4 zeigt zur Veranschaulichung des erfindungsgemäßen Baureihenkonzepts eine weitere Ausführungsform eines Basismoduls 10, das in ein und derselben Ausführung als Kernstück von unterschiedlich dimensionierten Brennstoffzellensystemen 1A, 1B, 1C verwendbar ist. Die Anordnung der Anschlusseinrichtungen 12 und 13 ist bei diesem Basismodul 10 ähnlich wie bei dem in Figur 2 gezeigten. Im Unterschied dazu ist hier aber wie bei Figur 1 eine Brennstoffpatrone 150 im Basismodul 10 vorgesehen. Die entsprechende Anschlusseinrichtung ist der besseren Anschaulichkeit zuliebe nicht dargestellt.

Da Stackgröße und Wärmetauschervolumen in gleicher Weise (linear) mit der Ausgangsleistung skalieren, kann ein Basismodul, das die Systemperipherie und die Elektronik beinhaltet, über einen weiten Leistungsbereich verwendet werden. Nur die leistungsabhängigen Einrichtungen, Brennstoffzelleneinrichtung ("Stack") und Wärmetauschereinrichtung ("Wärmetauscher"), und gegebenenfalls ein Brennstofftank, "wachsen" oder "schrumpfen" entlang der gleichen Richtung.

Stack und Wärmetauscher werden erfindungsgemäß derart angeordnet, dass sie bei Variation der Ausgangsleistung bei minimalem konstruktivem Aufwand, d.h. unabhängig von den sonstigen Komponenten, entlang derselben räumlichen Richtung "wachsen" bzw. "schrumpfen" können.

Ferner ist das Konzept auch bei variierenden Einsatzbedingungen des Produkts anwendbar. So müssen die Wärmetauscher - und andere Kühleinrichtungen wie Lüfter um so größer dimensioniert werden, je höher die gewünschte max. Außentemperatur ist. Der Wärmetauscher und der/die Lüfter müssen daher so angeordnet werden, dass sie unabhängig vom restlichen System "wachsen" bzw. "schrumpfen" können.

Die Vorteile des erfindungsgemäßen Baureihenkonzepts betreffen verschiedenste Herstellungs- und Betriebsstadien, z.B.:
- Konstruktion:: geringerer Entwicklungsaufwand
- Produktion:: erhöhte Anzahl Gleichteile und gleicher Montageschritte, verringerte Werkzeugkosten und sonstige Investitionen
- Einkauf:: verringerte Einkaufspreise durch Stückzahleffekte
- Kundendienst:: wie Einkauf; verringerte Lagerhaltungskosten.

Die oben beschriebenen Ausführungsformen sind als beispielhaft, keinesfalls aber als die vorliegende Erfindung einschränkend zu verstehen. Der Schutzbereich der Erfindung wird allein durch die nachfolgenden Patentansprüche definiert.

## Patentansprüche

1. Basismodul (10) für ein Brennstoffzellensystem (1), umfassend:
eine Anschlusseinrichtung (12) für eine Brennstoffzelleneinrichtung (20),
eine Anschlusseinrichtung (13) für eine Wärmetauschereinrichtung (30),
eine Anschlusseinrichtung (15) für eine Brennstoffzufuhreinrichtung (50).

2. Basismodul nach Anspruch 1, bei welchem die drei Anschlussseinrichtungen (12, 13, 15) an einer Seite des Basismoduls vorgesehen sind.

3. Basismodul nach Anspruch 1 oder 2, bei welchem zwei Anschlussseinrichtungen (12, 13) an einer Seite des Basismoduls vorgesehen sind und die dritte Anschlusseinrichtung (15) an der gegenüberliegenden Seite des Basismoduls vorgesehen ist.

4. Basismodul nach einem der vorangegangenen Ansprüche, bei welchem die Anschlusseinrichtung (12) für die Brennstoffzelleneinrichtung (20) und die Anschlusseinrichtung (13) für die Wärmetauschereinrichtung (30) an der selben Seite des Basismoduls (10) vorgesehen sind.

5. Brennstoffzelleneinrichtung (20) zur Verwendung mit einem Basismodul (10) nach einem der vorangegangenen Ansprüche, umfassend:
eine Anschlusseinrichtung zum Anschließen der Brennstoffzelleneinrichtung an der dafür am Basismodul (10) vorgesehenen Anschlusseinrichtung (12).

6. Wärmetauschereinrichtung (30) zur Verwendung mit einem Basismodul (10) nach einem der Ansprüche 1 bis 5 und einer Brennstoffzelleneinrichtung (20) nach Anspruch 6, umfassend:
eine Anschlusseinrichtung zum Anschließen der Wärmetauschereinrichtung an der dafür am Basismodul (10) vorgesehenen Anschlusseinrichtung (13).

7. Wärmetauschereinrichtung (30) nach Anspruch 6, welche in Abhängigkeit von einer Leistungsklasse der Brennstoffzelleneinrichtung (20) nach Anspruch 6 derart dimensioniert bereitgestellt wird, dass die Brennstoffzelleneinrichtung (20) und die zugehörige die Wärmetauschereinrichtung (30) in wenigstens einer räumlichen Dimension gleiche Abmessungen aufweisen.

8. Brennstofftank, insbesondere zur Verwendung als Brennstoffzufuhreinrichtung (50) bei einem Basismodul nach einem der Ansprüche 1 bis 4, umfassend:
eine Anschlusseinrichtung zum Anschließen des Brennstofftanks an der am Basismodul (10) vorgesehenen Anschlusseinrichtung (15) für eine Brennstoffzufuhreinrichtung (50).

9. Verfahren zur Herstellung eines Brennstoffzellensystems, umfassend:
Ankoppeln einer Brennstoffzelleneinrichtung (20) nach Anspruch 5 an der dafür an einem Basismodul (10) gemäß einem der Ansprüche 1 bis 4 vorgesehenen Anschlusseinrichtung (12),
Ankoppeln einer Wärmetauschereinrichtung (30) nach Anspruch 6 oder 7 an der dafür an dem Basismodul (10) vorgesehenen Anschlusseinrichtung (13).

10. Verfahren gemäß Anspruch 9, umfassend:
Ankoppeln eines Brennstofftanks nach Anspruch 8 an der an dem Basismodul (10) vorgesehenen Anschlusseinrichtung (13) für eine Brennstoffzufuhreinrichtung (50).
